(19) Europäisches Patentamt / European Patent Office / Office européen des brevets

(11) **EP 4 382 486 A1**

(12) # EUROPEAN PATENT APPLICATION
published in accordance with Art. 153(4) EPC

(43) Date of publication:
**12.06.2024 Bulletin 2024/24**

(21) Application number: **22867340.6**

(22) Date of filing: **06.09.2022**

(51) International Patent Classification (IPC):
*C01G 45/00* (2006.01)    *C01G 53/00* (2006.01)
*H01M 8/12* (2016.01)    *H01M 4/86* (2006.01)
*H01M 4/88* (2006.01)    *H01M 12/06* (2006.01)

(52) Cooperative Patent Classification (CPC):
**C01G 45/00; C01G 53/00; H01M 4/86; H01M 4/88;**
**H01M 8/12; H01M 12/06;** Y02E 60/50

(86) International application number:
**PCT/JP2022/033357**

(87) International publication number:
**WO 2023/038018 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.09.2021 JP 2021145653**

(71) Applicant: **DOWA Electronics Materials Co., Ltd.**
**Tokyo 101-0021 (JP)**

(72) Inventors:
• **UEYAMA, Toshihiko**
  **Okayama-shi, Okayama 702-8506 (JP)**
• **IKARI, Kazumasa**
  **Okayama-shi, Okayama 702-8506 (JP)**
• **OGAWA, Shintaro**
  **Okayama-shi, Okayama 702-8506 (JP)**

(74) Representative: **Müller-Boré & Partner**
**Patentanwälte PartG mbB**
**Friedenheimer Brücke 21**
**80639 München (DE)**

(54) **PEROVSKITE COMPOSITE OXIDE POWDER, AIR ELECTRODE FOR SOLID OXIDE FUEL CELLS USING SAME, AND SOLID OXIDE FUEL CELL**

(57)    In a perovskite-type composite oxide powder according to the present invention, the geometric standard deviation value of the maximum Feret diameter of the perovskite-type composite oxide powder calculated by performing image analysis on an SEM image acquired with a scanning electron microscope is equal to or greater than 1.01 and less than 1.60, and when it is assumed that the perovskite-type composite oxide powder is spherical, the ratio (B/A) of an area value B directly calculated by the image analysis to an area value A calculated from the maximum Feret diameter is equal to or greater than 0.7 and less than 1.0. In this way, the perovskite-type composite oxide powder is used as the air electrode material of an SOFC, and thus high conductivity as compared with a conventional air electrode material is obtained.

Fig. 1

FERET DIAMETER IN VERTICAL DIRECTION

FERET DIAMETER IN PARALLEL DIRECTION

EP 4 382 486 A1

**Description**

Technical Field

The present invention relates to perovskite-type composite oxide powders, and more particularly relates to a perovskite-type composite oxide powder (hereinafter also simply referred to as a "composite oxide powder") which is suitably used as a material of an air electrode for a solid oxide fuel cell (SOFC: hereinafter also simply referred to as an "SOFC)" and the like.

Background Art

Fuel cells are energy converters which can directly obtain electrical energy from chemical energy by reacting a fuel such as natural gas or hydrogen with oxygen in the air via a diaphragm through which ions pass. Since the fuel cells themselves generate only energy and water, they are attracting attention as small and large power generation devices.

Various forms of fuel cells are proposed. Examples thereof include a solid electrolyte type, a molten carbonate type, a phosphate type and a solid oxide type. Among these forms of fuel cells, a solid oxide fuel cell (SOFC) is considered to be particularly promising because although the operating temperature is so high as to be about 700 to 1000°C, power generation efficiency can be increased by combining the solid oxide fuel cell with a fuel reformer, and an expensive catalytic metal is not required.

Whether an air electrode is satisfactory or not significantly affects the power generation efficiency of the SOFC. Properties required for the air electrode of the SOFC include chemical stability, the passage efficiency of a gas serving as a raw material, the conductivity of a material and the like.

For example, in order to suppress a decrease in output caused by the use of an SOFC, Patent Document 1 proposes a material of an air electrode which includes a main phase composed of a perovskite-type composite oxide having a specific composition and a subphase composed of a perovskite-type composite oxide having another composition. In order to provide high breathability and the like to an air electrode for an SOFC, Patent Document 2 of the present applicant proposes, as a material of the air electrode, a composite oxide powder composed of spherical particles having high roundness (circularity). In order to reduce the amount of solvent as compared with a conventional method when a paint made of a composite oxide powder is formed, Patent Document 3 proposes, as a material of an air electrode, a perovskite-type composite oxide powder in which the amount of carbon dioxide gas absorbed per unit area is equal to or greater than a predetermined amount.

Related Art Document

Patent Document

Patent Document 1: Japanese Unexamined Patent Application Publication No. 2015-118922

Patent Document 2: Japanese Unexamined Patent Application Publication No. 2015-201440

Patent Document 3: Japanese Unexamined Patent Application Publication No. 2021-073164

Disclosure of the Invention

Problems to be Solved by the Invention

As the present inventors have proceeded with their study, they have found that there is a phenomenon which cannot be explained using conventional knowledge alone.

A problem to be solved by the present invention is to improve the conductivity of the air electrode of an SOFC as compared with a conventional air electrode.

Means for Solving the Problem

In order to solve the problem described above, the present inventors have studied shape factors which affect the conductivity of the air electrode of an SOFC to find that the maximum Feret diameter of a composite oxide powder affects the conductivity of the air electrode of the SOFC, with the result that they have achieved the present invention.

In a perovskite-type composite oxide powder according to a first aspect of the invention, the geometric standard deviation value of the maximum Feret diameter of the perovskite-type composite oxide powder calculated by performing image analysis on an SEM image acquired with a scanning electron microscope is equal to or greater than 1.01 and less than 1.60, and when it is assumed that the perovskite-type composite oxide powder is spherical, the ratio (B/A) of an area value B directly calculated by the image analysis to an area value A calculated from the maximum Feret diameter is equal to or greater than 0.7 and less than 1.0.

In a perovskite-type composite oxide powder according to a second aspect of the invention, the perovskite-type composite oxide powder has a composition represented by a general formula $ABO_{3-\delta}$ (where an A element is at least one selected from lanthanum, strontium and calcium, a B element is at least one selected from manganese, cobalt, nickel and iron and $\delta$ represents the amount of loss of oxygen).

In a perovskite-type composite oxide powder according to a third aspect of the invention, lanthanum is included as the A element serving as an essential component.

In a perovskite-type composite oxide powder according to a fourth aspect of the invention, the circularity of the perovskite-type composite oxide powder calculated by performing the image analysis on the SEM image acquired with the scanning electron microscope is equal to or greater than 0.7 and less than 1.0.

In a perovskite-type composite oxide powder according to a fifth aspect of the invention, a BET specific surface area is equal to or greater than 0.01 m$^2$ / g and equal to or less than 0.5 m$^2$ / g.

In a perovskite-type composite oxide powder according to a sixth aspect of the invention, an average particle diameter $D_{50}$ based on a volume that is obtained by a laser diffraction particle size distribution analyzer is equal to or greater than 10 $\mu$m and equal to or less than 50 $\mu$m.

An air electrode for a solid oxide fuel cell according to a seventh aspect of the invention includes the perovskite-type composite oxide powder described in any one of the aspects described above.

A solid oxide fuel cell according to an eighth aspect of the invention includes: a fuel electrode: a solid electrolyte; and an air electrode, and as the air electrode, the air electrode described above is used.

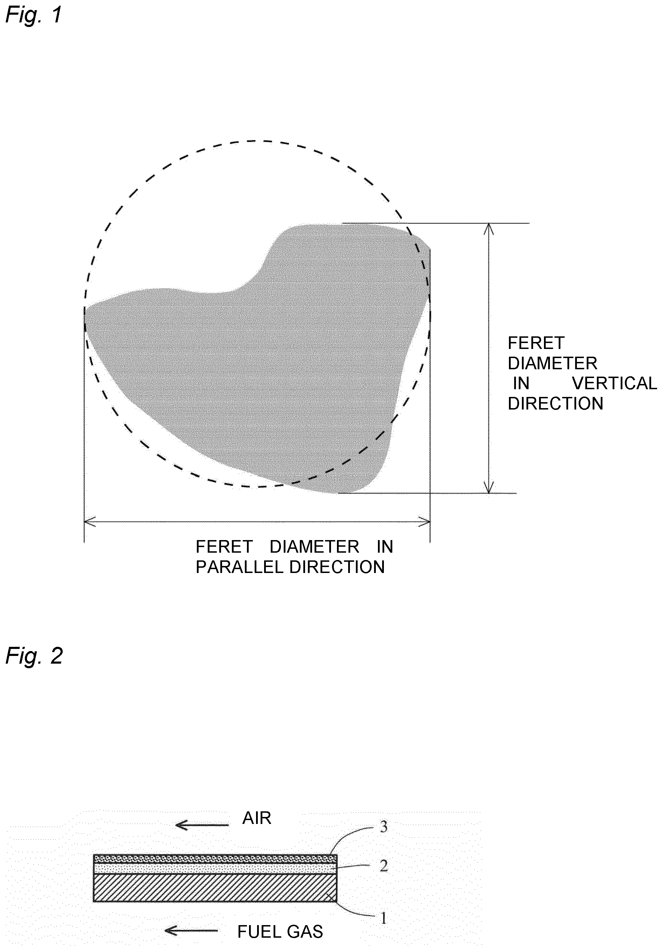

A Feret diameter refers to the size of a rectangle which circumscribes the measurement target of a binary image (a Feret diameter in a horizontal direction is the length of a side parallel to an X axis, a Feret diameter in a vertical direction is the length of a side parallel to a Y axis and the maximum Feret diameter is the value of one of these lengths in the horizontal direction and the vertical direction which is longer) (see FIG. 1).

In the present specification, the "perovskite-type composite oxide powder" means the aggregate of particles. Unless otherwise specified, the "to" indicated in the present specification is used to mean that numerical values listed before and after the "to" are included as lower and upper limit values.

Advantages of the Invention

In the air electrode of an SOFC which uses the perovskite-type composite oxide powder according to the present invention, better conductivity can be ensured.

Brief Description of Drawings

FIG. 1 is a diagram illustrating a Feret diameter and the like of a perovskite-type composite oxide powder; and
FIG. 2 is a cross-sectional configuration view schematically showing an example of an SOFC.

Description of Embodiments

One of the major features of a perovskite-type composite oxide powder according to the present invention is that the geometric standard deviation value of the maximum Feret diameter of the perovskite-type composite oxide powder calculated by performing image analysis on an SEM image acquired with a scanning electron microscope is equal to or greater than 1.01 and less than 1.60.

The geometric standard deviation is widely used as an index indicating the uniformity of a distribution when the distribution has a tail toward a coarse particle side. In order to increase the number of voids in the air electrode of an SOFC, it is preferable to form the composite oxide powder into a shape closest to a spherical shape. In terms of enhancing the packing of powder particles, a slight variation in particle diameter is acceptable. A variation in particle diameter is produced, and thus the packing is more enhanced, with the result that the effect of improving the conductivity is obtained. Hence, in the present invention, the geometric standard deviation of the maximum Feret diameter of the composite oxide powder is determined to be equal to or greater than 1.01 and less than 1.60. The geometric standard deviation of the maximum Feret diameter is more preferably equal to or greater than 1.10 and less than 1.60, and further preferably equal to or greater than 1.20 and less than 1.60.

The geometric standard deviation of the maximum Feret diameter of the composite oxide powder is calculated by converting a measured value to a common logarithm and then converting the standard deviation thereof to an antilogarithm. In the present invention, since the geometric standard deviation of the maximum Feret diameter is calculated, as the measured value of the maximum Feret diameter, a value calculated using a mechanical method described later is adopted.

Another of the major features of the perovskite-type composite oxide powder according to the present invention is that when it is assumed that the composite oxide powder is spherical, the ratio (B/A) of the area value B of the particle directly calculated by the image analysis to the area value A of the particle calculated from the maximum Feret diameter is equal to or greater than 0.7 and less than 1.0.

Since the area value A indicates the area of the circumscribed circle of the particle, the closer the value of the ratio (B/A) is to 1, the smaller the unevenness of the particle is and the closer the particle shape is to a spherical shape. A description will be given with reference to FIG. 1, and the area of a circle indicated by a dotted line is the area value A ((maximum Feret diameter / 2)$^2 \times \pi$), and an area directly calculated by image analysis on a colored particle is the area value B. In order to eliminate artificial factors, in the calculation of the Feret diameter, a value calculated by software is adopted without being processed. The ratio (B/A) of the area values is calculated from measured data (area values B) of particles and data calculated by calculation (area value A), and the average of at least 50 particles is determined and is used as the ratio of the area values.

When the particles of the composite oxide powder of the air electrode are spherical, the particles are uniformly present in the form of close packing, pores are evenly opened between the particles, the flow of oxygen is made uniform and a large number of three-layer interfaces in which the three layers of the air electrode, an electrolyte and a gas phase are in contact with each other are efficiently formed, with the result that power generation efficiency is increased. On the other hand, when the shape of the particles of the air electrode is a shape other than a spherical shape an example of which is a rectangular parallelepiped, depending on how the particles are in contact with each other, parts where pores are not present and parts where large pores are excessively present are formed. Consequently, the flow of oxygen is made nonuniform, a small number of three-phase interfaces are produced and thus the power generation efficiency is decreased.

The composition of the perovskite-type composite oxide powder according to the present invention is preferably a composition represented by a general formula $ABO_{3-\delta}$ (where an A element is at least one selected from lanthanum (La), strontium (Sr) and calcium (Ca), a B element is at least one selected from manganese (Mn), cobalt (Co), nickel (Ni) and iron (Fe) and $\delta$ represents the amount of loss of oxygen). A composition in which La is included as the A element is more preferable. Specific examples thereof include: (La, Sr, Ca) $MnO_{3-\delta}$-based composite oxide powder containing La, Sr, Ca and Mn (hereinafter also referred to as an "LSCM"); (La, Sr) (Co, Fe) $O_{3-\delta}$-based composite oxide powder containing La, Sr, Co and Fe (hereinafter also referred to as an "LSCF"); (La, Sr) $CoO_{3-\delta}$-based composite oxide powder containing La, Sr and Co (hereinafter also referred to as an "LSC"); (La, Sr) $MnO_{3-\delta}$-based composite oxide powder containing La, Sr and Mn (hereinafter also referred to as an "LSM"); and La (Ni, Co) $O_{3-\delta}$-based composite oxide powder (hereinafter also referred to as an "LNC"). One or two or more of them may be mixed to be used as the composite oxide powder. The composite oxide powders described above have electronic conductivity, and can be utilized, for example, as an adsorbent, a catalyst carrier, a separation film, an oxygen electrode of a fuel cell or the like, an electrode of a capacitor or the like, a member of a functional filter, a gas sensor, a lithium storage device, a dye-sensitized solar cell and the like.

Among them, in particular, the LSCM, the LSCF and the LCN represented by formulae below are suitably used as the material of the air electrode for the SOFC. As the general formulae, the LSCM is $(La_{1-x-y}Sr_xCa_y)_aMnO_{3-\delta}$ (in the formula, $0.1 \leq x \leq 0.5$, $0.1 \leq y \leq 0.5$ and $0.9 \leq a \leq 1.1$), the LSCF is $(La_{1-x}Sr_x)_aCo_yFe_{1-y}O_{3-\delta}$ (in the formula, $0.1 \leq x \leq 0.5$, $0.1 \leq y \leq 0.5$ and $0.9 \leq a \leq 1.1$) and the LCN is $La_aCo_xNi_{1-x}O_{3-\delta}$ (in the formula, $0.1 \leq x < 1.0$ and $0.9 \leq a \leq 1.1$).

Although the composition of oxygen is stoichiometrically 3, oxygen may be partially deficient or may be excessively present depending on the situation. In the composite oxide of the present invention, a crystal structure confirmed by X-ray diffraction preferably has a perovskite-type structure as a main component, and an inevitable impurity phase caused by other raw materials or the like may be present as long as the impurity phase does not affect the properties thereof.

In the composite oxide powder according to the present invention, the circularity of the particles calculated from the following formula is less than 1.0, preferably equal to or less than 0.95 and more preferably equal to or less than 0.90. The circularity is decreased as the particles are more complicated, and the lower limit value thereof is preferably equal to or greater than 7.0 so that at least the effects of the present invention are obtained. The circularity of the particles are in the range as described above, and thus the three-phase interfaces are preferably formed. The perimeter of the particle is preferably calculated by image analysis software described later.

Circularity = 4 × π × (area value B) / (perimeter of particle calculated by image analysis)$^2$

The geometric standard deviation value of the maximum Feret diameter of the composite oxide powder and the circularity are factors which affect the power generation performance of the SOFC. The geometric standard deviation of the maximum Feret diameter and the circularity are in specific ranges, and thus it is possible to provide further preferable SOFC. Specifically, it is preferable that when the geometric standard deviation value of the maximum Feret diameter is equal to or greater than 1.01 and less than 1.60 and the circularity is equal to or greater than 0.70 and equal to or less than 0.95, and preferably, the geometric standard deviation value of the maximum Feret diameter is greater than 1.30 and less than 1.60 and the circularity is equal to or greater than 0.75 and equal to or less than 0.95, the packing of the particles is dense, the three-phase interfaces which affect the power generation performance can be suitably formed and thus the power generation performance is enhanced.

The BET specific surface area of the composite oxide powder according to the present embodiment is a value measured with a BET specific surface area measuring device (Macsorb (registered trademark) HM model-1210 made by Mountech Co., Ltd.) by a BET one-point method using nitrogen adsorption. The BET specific surface area of the composite oxide powder is preferably equal to or greater than 0.01 m$^2$ / g and equal to or less than 0.5 m$^2$ / g. The BET specific surface area is more preferably equal to or less than 0.3 m$^2$ / g and further preferably equal to or less than 0.2 m$^2$ / g. It is undesirable that the BET specific surface area is excessively high because it is difficult to adjust viscosity.

The average particle diameter of the composite oxide powder according to the present embodiment is the value of a 50% cumulative particle diameter ($D_{50}$) based on a volume which is measured with a wet laser diffraction scattering particle size distribution measuring device.

The average particle diameter $D_{50}$ of the composite oxide powder is preferably equal to or greater than 10 μm and equal to or less than 50 μm. The average particle diameter $D_{50}$ is more preferably equal to or greater than 15 μm and equal to or less than 45 μm and further preferably equal to or greater than 20 μm and equal to or less than 40 μm. The particle size distribution measurement using the measuring device described above is performed to measure variations in particles which approximate a spherical shape, and thus it is possible to know three-dimensional variations in particle size. Variations in preferable particles obtained by the image analysis on the SEM image and three-dimensional variations in particle size are set in specific ranges, and thus better power generation performance is obtained. The coefficient of variation of the particle size distribution calculated by the measuring device described above is equal to or less than 75%, preferably equal to or less than 70% and further preferably equal to or less than 60%. In order to set the particle size distribution in a specific range, a known classification method such as sieving can be used.

(Image analysis)

The geometric standard deviation value of the maximum Feret diameter of the composite oxide powder, the area value A, the area value B and the perimeter of the particle are analyzed and evaluated as follows.

The image analysis software (made by Media Cybernetics, Inc. in the U.S., Image-Pro Plus or the like) is used to analyze and evaluate a scanning electron microscope (SEM) image which is previously shot. A commercially available scanning electron microscope (SEM) can be selected as necessary to make a measurement, and a measurement magnification is not particularly limited as long as the shape of the particle can be checked. In the present specification, a Schottky field emission scanning electron microscope (JSM-7200F model) made by JEOL Ltd. is used. Regarding an acceleration voltage, it is preferable to use a low speed because it is necessary to check a surface state, and it is preferable to set the acceleration voltage equal to or less than 10 kV. In the present specification, the shooting is performed with an acceleration voltage of 3.0 kV, an acceleration current of 10 μA, a WD (Working Distance) of 12 mm and an SE Detector of Mix. The SEM image is saved with a micron bar displayed and its background set to black. It is preferable to set the resolution of the SEM image to 1280 × 960 (pixels) or higher because when the image analysis is performed, sufficient analysis accuracy is obtained. On the other hand, when the resolution is excessively high, it takes much time to analyze the image, with the result that in terms of an image analysis time, it is preferable to set the resolution to a value around 1280 × 960 (pixels).

Although here, the particle can be arbitrarily selected, when the sintering or the like of the particles occurs, it is assumed that the particles behave as an aggregate, and thus the particles can be measured as one particle whereas when a part of the particle is arbitrarily outside the field of view, it is difficult to confirm the shape of the particle, and thus such a particle is omitted from the evaluation. Here, as the number of particles to be measured, 50 or more independent particles need to be measured.

The image analysis is performed by the following method. The maximum Feret diameters of 50 or more particles in the field of view are calculated from the image analysis. Here, it is preferable to automatically calculate the maximum Feret diameters by the image analysis software because artificial measurement errors and the like can be avoided. As shown in the illustrative diagram of FIG. 1, Feret diameters in the vertical direction and a parallel direction are calculated.

Here, when the Feret diameters in the vertical direction and the parallel direction are compared, since the Feret diameter in the parallel direction is longer, when the particle is in the shape shown here, the maximum Feret diameter is the Feret diameter in the parallel direction. The operation described above is performed on each of the particles to measure the maximum Feret diameters of the particles. The geometric standard deviation value is calculated from the values of the maximum Feret diameters of the particles obtained in this way. Here, the numerical conversion of the maximum Feret diameter to a logarithm and the calculation of the geometric standard deviation value can be performed using commercially available spreadsheet software.

The analysis of the image obtained is performed using the image analysis software Image-Pro Plus Ver. 7.0.1 made by Media Cybernetics, Inc. in the U.S. As a specific example of the analysis, the following conditions can be mentioned.

The number of particles in the image which is previously shot is first measured automatically by the software. Here, when the particles are not successfully extracted due to contrast or the like, it is preferable to automatically adjust the contrast and analyze the image with appropriate brightness.

Since the image acquired from the SEM has a depth in a thickness direction, particles which are not suitable for evaluation in the thickness direction as well as particles which do not fit into an acquisition range (particles whose entire images cannot be confirmed) are also observed. Preferably, when the image is shot with the SEM, since the shot image includes particles in the vertical direction, the image is binarized and thus it is possible to accurately grasp the external shapes of the particles themselves. In the binarization, particles to be measured are arbitrarily selected. In the acquired photograph, a setting is used in which particles that are cut off on the edges of the image are automatically excluded from measurement targets (particles on border lines are excluded), and thus the particles which are on the edges of the top, bottom, left, and right of a window are excluded from the measurement targets. However, in the case of the SEM image, in a bottom part, a sample name and a scale are displayed, and thus a micron bar may be displayed. Since particles which overlap the micron bar may be counted, when the particles which are determined to be independent in this way, the particles need to be manually excluded.

In order to exclude cases where the cross-sectional shape of the particle cannot be accurately grasped by excluding a case where the shot particle has a dent and a case where the image is three-dimensional, particles overlap each other and thus the particles which are located in a lower part in the thickness direction (those which are evaluated to be small) are targets to be evaluated, a setting for calculating all areas closed by the boundaries of particles (for filling holes) is selected, smoothing scores (the maximum value is 100) are unified to 12 to set uniform conditions and as a condition for recognizing the boundaries of particles, four connection is selected. A preset area value (50 pixels) or less is set to eliminate debris which is mixed in during the shooting. An option to combine and separate particles is not used because the option is an obstacle to grasping of the conditions of the particles.

(Manufacturing method)

A method for manufacturing the composite oxide powder according to the present invention will then be specifically described.

The composite oxide powder according to the present invention is produced through steps below. The "step (b) of drying and granulating raw materials" can be omitted.

Step (a): step of mixing and pulverizing raw materials
Step (b): step of drying and granulating raw materials
Step (c): step of burning granulated powder
Step (d): step of disintegrating burned powder

The steps will be described in turn below.

Step (a): step of mixing and pulverizing raw materials

(Weighing)

Predetermined component raw materials are weighed such that the composite oxide powder of an intended composition having the perovskite-type structure is generated. As the component raw materials, commonly used materials can be suitably used. Examples thereof include oxides, hydroxides, nitrates, carbonates, nitrates, organic acid salts and the like containing La, Sr, Ca, Mn, Co, Ni and Fe. Among them, for reasons of environmental aspects and availability, carbonates, hydroxides and oxides are particularly preferable. In the component raw materials, for one element, two or more types of compounds arbitrarily selected from carbonates, oxides, hydroxides, nitrates and the like can also be selected as element sources. Since the granulated powder of the raw materials are manufactured by spray drying in a subsequent step, the component raw materials are preferably water-insoluble salts. The weights of impurities in each of the salts of the component raw materials are preferably set equal to or less than 100 ppm.

(Mixing)

Predetermined amounts of component raw materials which are weighed are mixed with pure water, and thus raw material slurry is obtained. In terms of obtaining the perovskite-type composite oxide powder having satisfactory properties, the solid content concentration of the raw material slurry is preferably equal to or greater than 25% by mass. In terms of dry efficiency, the solid content concentration of the raw material slurry is preferably equal to or greater than 40% by mass. However, when the solid content concentration of the raw material slurry is equal to or greater than 50% by mass, the viscosity of the slurry is excessively high, and thus it may be difficult to pulverize the raw materials. Hence, when the solid content concentration of the raw material slurry is equal to or greater than 50% by mass, it is preferable to add a dispersant to the raw material slurry. As the dispersant, ammonium polyacrylate or the like is preferably used.

(Wet-pulverization)

Wet-pulverization is preferably performed with a bead mill. The material of a pulverizing medium which is used for the bead mill is not particularly limited as long as the material has high mechanical strength. In terms of obtaining the desired efficiency of the pulverization, the diameter of the pulverizing medium (bead) is preferably equal to or less than 2.0 mm.

(Dispersion)

More preferably, after the raw material slurry is pulverized with the bead mill, the raw material slurry is further dispersed to be highly uniform. As a preliminary stage, it is necessary to separate and collect the beads used in the bead mill from the slurry. A satisfactory method is to separate and collect the beads by passing the slurry through a sieve with openings which are three-fourths or less of the diameter of the bead. However, it is not appropriate to use a sieve with excessively small openings because solid matter is adhered to the meshes of the sieve to cause clogging, and thus the efficiency of separation and collection is lowered. Here, a device is preferably washed with pure water as much as possible so that the pulverized powder is prevented from being adhered to the beads to lower the efficiency of collection of the pulverized powder. However, it should be noted that when an excessive amount of pure water is added, it may be difficult to adjust the solid content concentration at later stages. Although as a method for dispersing the raw material slurry, a known method can be adopted, a method for dispersing the raw material slurry by applying a shear force is preferably adopted. Examples thereof include a method for dispersing the raw material slurry with a high-speed shear disperser. As the high-speed shear disperser, for example, a dissolver type, a rotor stator type, a colloid mill type or a thin film swirl type is used, and among them, the rotor stator type disperser is more suitably used. When the rotor stator type disperser with a small scale having a capacity of about 5L is used, the rotation speed is preferably equal to or less than 10000 rpm, and more preferably equal to or less than 8000 rpm. For treatment of a larger capacity, the rotation speed is preferably determined as necessary with consideration given to a scale factor.
The dispersion step as described above is added, and thus the uniformity of the raw material slurry is more increased, with the result that a more uniform dried product can be obtained during spray drying. Consequently, a more homogeneous composite oxide powder can be obtained.

Step (b): step of drying and granulating raw material slurry

(Drying and granulating)

The raw material slurry after the wet-pulverization is dried and granulated. Spray drying is suitable for drying the raw material slurry and granulating it into spheres. In terms of obtaining the spherical granulated powder, a spray dryer is suitably used for the spray drying. Although as the spray dryer, a nozzle-type spray dryer and a disc-type spray dryer are available, the disc-type spray dryer is preferable in order to obtain spherical particles having a large particle diameter. Depending on the supply speed of the raw material slurry, the air flow rate of the dryer and the capacity of a chamber, as the rotation speed of an atomizer disc is increased, the operation of shearing and granulating the raw material slurry is made more uniform, with the result that the particles are easily formed to be spherical without being distorted. The disc-type spray dryer is used, and thus the particles having a uniform maximum Feret diameter can be formed.
The temperature of hot air for drying is preferably a temperature at which no water remains in the granulated particles after the spray drying. Specifically, an inlet temperature is preferably 150 to 200°C, and an outlet temperature is preferably equal to or greater than 60°C.

For example, when the capacity of a drying chamber in the device is about 1 m$^3$, the supply speed of the raw material slurry is preferably set to 5 to 30 kg/h because it is possible to maintain the shape of the granulated particles and ensure productivity. It is undesirable that the solid content concentration of the slurry is excessively high because it likely that when the slurry is supplied into the chamber, the fluidity of the slurry is kept low or that the slurry is not dried enough to be half-dried. On the other hand, it is not appropriate that the solid content concentration of the slurry is excessively low because the efficiency of collection is excessively low. Therefore, the solid content concentration of the slurry is preferably in a range of 30 to 90%, more preferably in a range of 35 to 85% and further preferably in a range of 40 to 80%.

Then, the granulated powder obtained is dried with the dryer until the amount of water in the granulated powder is less than 5.0% by mass. The amount of water in the granulated powder is set less than 5.0% by mass, and thus it is possible to suppress the generation of a gas from the granulated powder in a burning step described later and to reduce irregularly shaped particles. In this way, it is possible to set the geometric standard deviation value of the maximum Feret diameter equal to or grater than 1.01 and less than 1.60, and to set the circularity equal to or greater than 0.70 and equal to or less than 0.95. The amount of water in the granulated powder is preferably equal to or less than 4.5% by mass and more preferably equal to or less than 4.0% by mass. The amount of water in the granulated powder can be measured with an infrared water meter. The drying using the dryer is preferably performed at 90 to 150°C.

Step (c): step of burning granulated powder

The granulated powder which is dried is burned in a burning furnace. As the burning furnace, a conventional known burning furnace such as a shuttle kiln, a roller hearth kiln or a rotary kiln of an electric or gas heat source can be used. In terms of increasing a filling rate within the particles of the composite oxide powder to increase the conductivity of the particles, a burning temperature is preferably equal to or greater than 850°C and equal to or less than 1600°C. In terms of increasing the conductivity of the composite oxide powder, the burning temperature is preferably equal to or greater than 900°C. The burning temperature is preferably equal to or less than 1500°C because it is easy to disintegrate the burned powder after the burning, and the burning temperature is further preferably equal to or less than 1400°C because the shapes of the particles are made uniform. The BET specific surface area can be adjusted to a desired value by adjusting the burning temperature.

A temperature increase rate in the burning step is preferably set equal to or less than 10°C/min. A burning atmosphere is preferably the air or a gas which contains 20% by volume or less of oxygen and nitrogen serving as the remainder. Preferably, the burning furnace or a burning container is set to have an open system, and the temperature is increased while a gas component generated from the raw material salts of the component raw materials is being removed. This is because the amount of gas generated at a temperature increase stage is larger than the other steps, the gas generated at the temperature increase stage is rapidly removed, thus particle growth is suppressed while the spherical shape is being destroyed or recesses and projections are being formed in the particle surface and consequently, irregularly shaped particles can be reduced. On the other hand, when the granulated powder is burned in a closed system which blocks gas inflow into and outflow out of the burning furnace or the burning container, the system is filled with a gas generated from the component raw materials, thus the particles grow while their shapes are being destroyed and consequently, the shapes of the particles may be distorted.

Although a method for removing the gas component generated from the raw material salts of the component raw materials is not limited, for example, a method is mentioned which rapidly replaces the gas component by blowing a gas having the same composition as the burning atmosphere (in particular, having the same oxygen concentration). However, it is undesirable that the speed of the gas which is blown is excessively high because the granulated powder may collapse or dust may be generated.

The open system in the present specification is assumed to be a reaction system in which the burning furnace or the burning container is not sealed and the gas of the burning atmosphere can flow into and out of the burning furnace or the burning container.

In order to improve the surface properties of the burned powder, it is possible to arbitrarily add, for example, a step of performing heat treatment on the burned powder under presence of carbon dioxide by a method disclosed in Patent Document 3.

Step (d): step of disintegrating burned powder

The burned powder is disintegrated, and thus the composite oxide powder is obtained. Care should be taken not to destroy the spherical shape of the particles in the disintegration. A sample mill, a Henschel mixer, a pin mill or the like can be used for the disintegration, and the disintegration is performed under conditions in which the spherical shape of the particles is not destroyed. Specifically, for example, when a Henschel mixer having a capacity of 20L is used, the

EP 4 382 486 A1

rotation speed is equal to or less than 2500 rpm and preferably 2000 rpm. This is because when the rotation speed is equal to or less than 2500 rpm, the spherical shape of the particles is prevented from being destroyed. When the capacity is changed, the rotation speed is adjusted as necessary, and thus the spherical shape of the particles is prevented from being destroyed.

The composite oxide powder obtained in the steps described above is measured with a wet laser diffraction particle size distribution device (for example, Microtrac), and a 50% cumulative particle diameter ($D_{50}$) based on a volume is 10 $\mu$m to 50 $\mu$m, preferably 15 $\mu$m to 45 $\mu$m and further preferably 20 $\mu$m to 40 $\mu$m.

(Air electrode for SOFC)

The composite oxide powder according to the present invention is suitably used as the air electrode of the SOFC. For example, the air electrode of the SOFC is produced by sintering the composite oxide powder according to the present invention as a molded member.

As a means for forming a sintered member from the composite oxide powder, a means itself which is known is applied. For example, the composite oxide powder is first mixed with a binder and is filled in a mold having a certain volume. Then, a pressure is applied from above, and thus the molded member of the composite oxide powder is produced. A method for applying a pressure is not particularly limited, and examples thereof include a mechanical uniaxial press, a cold isostatic pressure (CIP) press and the like. Then, the molded member is subjected to heat treatment, and thus the sintered member is obtained. A heat treatment temperature is preferably equal to or greater than 1000°C and equal to or less than 1450°C. When the heat treatment temperature is equal to or greater than 1000°C, the mechanical strength of the molded member is sufficiently kept whereas the heat treatment temperature is preferably equal to or less than 1450°C because there is no possibility that a part of the generated perovskite-type composite oxide powder is decomposed to form an impurity so as to cause the composition to be nonuniform. A heat treatment time is preferably equal to or more than 2 hours and equal to or less than 24 hours.

(SOFC, solid oxide fuel cell)

The SOFC will be described. FIG. 2 is a cross-sectional configuration view schematically showing an example of the SOFC. The SOFC has a structure in which a fuel electrode 1 in a thin plate shape or a sheet shape which serves as a support member, a solid electrolyte membrane 2 which is formed on the surface of the fuel electrode 1 and an air electrode 3 in a thin plate shape or a sheet shape which is formed on the surface of the solid electrolyte membrane 2 are stacked.

When a fuel gas (which is typically hydrogen ($H_2$) but may be hydrocarbon (methane ($CH_4$)) or the like) is supplied to the fuel electrode 1, a gas (air) containing oxygen ($O_2$) is passed to the air electrode 3 and a current is applied to the SOFC, in the air electrode 3, the oxygen in the air forms into oxide ions. The oxide ions are supplied to the fuel electrode 1 from the air electrode 3 through the solid electrolyte 2. Then, in the fuel electrode 1, the oxide ions react with the fuel gas to generate water ($H_2O$), and thus electrons are emitted to generate electricity.

Although the SOFC depends on the configuration of a fuel cell which is applied and the manufacturing process thereof, the multilayer of the fuel electrode, the solid electrolyte membrane and the like is previously produced, a layer containing the air electrode material is formed on the multilayer by a print method or the like and thus the air electrode 3 is formed, with the result that the fuel cell is produced.

The film thickness of the air electrode 3 is preferably determined as necessary according to the structure of the cells of the SOFC and the like, and for example, the film thickness is preferably equal to or greater than 20 $\mu$m and equal to or less than 50 $\mu$m.

For a solid electrolyte layer 2, an electrolyte material used in the material of the air electrode can be used, and examples thereof include a rare earth element-doped ceria-based solid oxide electrolyte and a rare earth element-doped zirconia-based solid oxide electrolyte.

The film thickness of the solid electrolyte layer 2 is set in a balanced manner such that the solid electrolyte layer is thick enough to maintain the denseness of the solid electrolyte layer and is thin enough to provide conductivity of oxygen ions or hydrogen ions suitable for the SOFC. The film thickness is preferably equal to or greater than 0.1 $\mu$m and equal to or less than 50 $\mu$m, and more preferably equal to or greater than 1 $\mu$m and equal to or less than 20 $\mu$m.

The fuel electrode 1 is preferably formed to have a porous structure and to be able to make contact with the supplied fuel gas As the material of the fuel electrode 1, a material which is conventionally used for the SOFC can be used. Examples thereof include metal oxides formed of one or more types selected from metals and/or metal elements such as nickel (Ni), copper (Cu), gold (Au), platinum (Pt), palladium (Pd), ruthenium (Ru) and other platinum group elements, cobalt (Co), lanthanum (La), strontium (Sr) and titanium (Ti). One or two or more types thereof may be mixed to be used.

In terms of durability, a thermal expansion coefficient and the like, the film thickness of the fuel electrode 1 is

9

preferably equal to or greater than 20 $\mu$m and equal to or less than 1 $\mu$m, and more preferably equal to or greater than 20 $\mu$m and equal to or less than 250 $\mu$m.

The structure of the SOFC can be formed in a flat shape, a polygonal shape, a cylindrical shape, a flat cylindrical shape obtained by vertically crushing the circumferential side of a cylinder or the like, which is conventionally known, and the shape and the size thereof are not particularly limited. As a flat SOFC, in addition to a fuel electrode support type (ASC), for example, an electrolyte support type (ESC) in which an electrolyte is thick, an air electrode support type (CSC) in which an air electrode is thick and the like are mentioned. Moreover, a metal support cell (MSC) in which a porous metal sheet is put under a fuel electrode can be provided.

[Examples]

The present invention will be more specifically described below with reference to Examples.

(Example 1)

(1) Production of raw material slurry

<1> 3192 g of $La_2O_3$, 1417 g of $SrCO_3$, 960 g of $CaCO_3$, 4612 g of $MnCO_3$, 4100 g of pure water and 500 g of an ammonium polyacrylate dispersant were weighed such that a composition of $La_{0.49}Sr_{0.24}Ca_{0.25}Mn_{1.05}O_3$ was provided.
<2> 3100 g of $ZrO_2$ beads having a diameter of 1.75 mm was put into a vessel of a bead mill (capacity of 1.2 liters).
<3> The pure water and the dispersant were put into a buffer tank and mixed to be a dispersant aqueous solution. Then, the dispersant aqueous solution was circulated into the bead mill using a pump.
<4> While the dispersant aqueous solution in the buffer tank was being stirred at 400 rpm, the $La_2O_3$, the $SrCO_3$, the $CaCO_3$ and the $MnCO_3$ which were weighed were put thereinto.
<5> The bead mill was rotated at 1000 rpm, and the $La_2O_3$, the $SrCO_3$, the $CaCO_3$ and the $MnCO_3$ which were put thereinto were crushed for 80 minutes. Thereafter, the beads were separated and collected by passing the slurry through a sieve with an opening of 1 mm, and the raw materials adhered to the beads were washed with pure water of 200 ml. The slurry obtained was dispersed at 8000 rpm for 5 minutes with a high-speed emulsifying/dispersing machine (Homomixer Mark II made by PRIMIX Corporation), and thus raw material slurry was produced.

(2) Drying and granulating

<1> Pure water was further added into the produced raw material slurry, and thus the solid content concentration of the powder of the raw material slurry was adjusted to be 63% by mass.
<2> The rotation speed of the disc of a spray dryer (spray dryer made by OHKAWARA KAKOHKI CO., LTD.) was set to 25000 rpm, the inlet temperature and the outlet temperature of hot air for drying were set to 150°C and 75 °C, respectively, the supply speed of the raw material slurry was set to 9 kg / h, spray drying was performed on the raw material slurry and thus granulated powder was obtained. The granulated powder obtained was dried with a hot air dryer at 100°C for 1 hour. When the amount of water in the granulated powder which was dried was measured with an infrared water meter, the amount of water was 4.0% by mass.

(3) Burning

230 g of the granulated powder obtained was put into a cylindrical crucible (with a diameter of 12 cm and a height of 5 cm). Then, a temperature increase rate was set to 7.0°C / min from 25°C to 800°C in the air and to 3.5°C / min from 800°C to 1300°C, after holding the temperature at 1300°C for 4 hours, a heater was turned off and the temperature was allowed to cool down naturally, with the result that burned powder was obtained.
When the burned powder obtained was analyzed by X-ray diffraction measurement described later, the burned powder was confirmed to be the perovskite-type composite oxide powder.

(4) Disintegration

2000 g of the burned powder obtained was put into a Henschel mixer.

The rotation speed of the Henschel mixer was set to 1400 rpm, the burned powder was crushed for 60 seconds and thus a perovskite-type composite oxide powder in Example 1 was obtained.

A measured area value (B), an area value (A) calculated from the maximum Feret diameter, the maximum Feret diameter and its geometric standard deviation value, a circularity, a specific surface area value obtained by the BET method, a conductivity and an average particle diameter $D_{50}$ in the perovskite-type composite oxide powder obtained were measured by the following methods. The results of the measurements are shown in Table 2.

(X- ray diffraction measurement)

An XRD measurement was performed on the composite oxide powder with Ultima IV made by Rigaku Corporation. As measurement conditions, a Cu tubular ball was used, a tube voltage was set to 40 kV, a tube current was set to 40 mA, a divergence slit was set to 1/2°, a scattering slit was set to 8 mm, a light receiving slit was set to open, a step width was set to 0.02° and a measuring time was set to 4°/minute. Based on an X-ray diffraction pattern obtained, analysis software (integrated powder X-ray analysis software PDXL2 ICDS (Inorganic Crystal Structure Database) made by Rigaku Corporation) incorporated in an X-ray diffraction (XRD) device was used to identify the crystal phase of the composite oxide powder and to analyze the composition of impurity components. Although it is appropriate that the crystal phase is a single phase, a small amount (in which the intensity ratio of a different phase to the main peak of a perovskite phase is less than 10%) is acceptable. However, for example, when a decrease in conductivity is caused by the presence of the different phase, the presence of the different phase should be decreased as much as possible.

(Image analysis)

The geometric standard deviation value of the maximum Feret diameter, the area value A, the area value B, the perimeter of the particle and the circularity in the composite oxide powder were analyzed and evaluated as follows.

The image analysis software (made by Media Cybernetics, Inc. in the U.S., Image-Pro Plus or the like) was used to analyze and evaluate a scanning electron microscope (SEM) image which was shot. As the scanning electron microscope (SEM), the Schottky field emission scanning electron microscope (JSM-7200F model) made by JEOL Ltd. was used. The shooting was performed with an acceleration voltage of 3.0 kV, an acceleration current of 10 μA, a WD (Working Distance) of 12 mm and an SE Detector of Mix. The magnification of the photograph used for calculating the particle diameter was set to 1000 times. The SEM image was saved with a micron bar displayed and its background set to black. The resolution of the SEM image was set to 1280 × 960 (pixels) or higher.

In the selection of the particles, when the sintering or the like of the particles occurred, the particles were measured as one particle. When a part of the particle was arbitrarily outside the field of view, such a particle was omitted from the evaluation. As the number of particles to be measured, 50 or more independent particles were measured.

The image analysis was performed using the image analysis software Image-Pro Plus Ver. 7.0.1 made by Media Cybernetics, Inc. in the U.S.

The number of particles in the image which was shot was measured automatically by the software. Here, when the particles were not successfully extracted due to contrast or the like, the contrast was automatically adjusted, and the image was analyzed with appropriate brightness. The image was binarized. In the shot image, a setting was used in which particles that were cut off on the edges of the image were automatically excluded from measurement targets (particles on border lines were excluded), and thus the particles which were on the edges of the top, bottom, left, and right of a window were excluded from the measurement targets. However, in the case of the SEM image, in a bottom part, a sample name and a scale are displayed, and thus a micron bar may be displayed. Since particles which overlapped the micron bar were likely to be counted, when the particles which were determined to be independent in this way, the particles were manually excluded.

A setting for calculating all areas closed by the boundaries of particles (for filling holes) was selected, smoothing scores (the maximum value was 100) were unified to 12 to set uniform conditions and as a condition for recognizing the boundaries of particles, four connection was selected. A preset area value (50 pixels) or less was set to eliminate debris which was mixed in during the shooting. An option to combine and separate particles was not used because the option was an obstacle to grasping of the conditions of the particles.

(BET specific surface area)

The BET specific surface area of the composite oxide powder was measured with the BET specific surface area measuring device (Macsorb (registered trademark) HM model-1210 made by Mountech Co., Ltd.) by the BET one-point method using nitrogen adsorption. In the measurement of the BET specific surface area, degassing conditions before the measurement were set to 105°C for 20 minutes.

(Conductivity)

For the measurement of the conductivity of an air electrode, an air electrode material was formed into a pellet, and a source meter (Source Meter Model 2400 Series made by Keithley Instruments) was used to measure the conductivity. Specifically, a powder molding press was used to apply a pressure of 2 MPa to the air electrode material for 1 minute, and thus the pellet of 5 mm × 5 mm × 20 mm was molded. Thereafter, a CIP molding machine (cold isostatic pressure device) was used to mold the pellet for 2 minutes with a pressure of 300 MPa. The molded pellet was increased in temperature at 5 °C / min from 25°C to 1200°C and after holding the temperature at 1200°C for 2 hours, the temperature was allowed to cool down naturally, with the result that the conductivity measurement pellet was obtained. A platinum wire having a diameter of 0.2 mm was wound at a total of four parts of the pellet obtained at intervals of 3.5 mm in both ends and the inside. A sample surface and the platinum wire were bonded using silver paste. The pellet was changed in temperature from 25°C to 900°C with an electric heater. The pellet was held at 900°C, a 4-terminal method for the source meter was used to apply a current to terminals at both ends while a current value was being changed by 10 mA from 30 mA to -30 mA and voltage values generated at terminals thereinside were measured. A resistance value was calculated from a relationship between the voltages and the currents obtained at 6 parts. Then, conductivity $\sigma$ was calculated from a formula below.

$$\text{Conductivity } \sigma = L / (R \times b \times d)$$

(in the formula, L represents a distance between voltage terminals, $b \times d$ represents a cross-sectional area and R represents resistance).

(Average particle diameter $D_{50}$)

The average particle diameter of the composite oxide powder according to the present embodiment was the value of a 50% cumulative particle diameter ($D_{50}$) based on a volume which was measured with the wet laser diffraction scattering particle size distribution measuring device.

(Example 2)

A composite oxide powder in Example 2 was produced in the same manner as Example 1 except that 3023 g of $La_2O_3$, 1826 g of $SrCO_3$, 1976 g of $Fe_2O_3$, 736 g of $CoCO_3 \cdot xH_2O$, 3000 g of pure water and 400 g of an ammonium polyacrylate dispersant were weighed and raw material slurry was produced such that the powder had a composition of $La_{0.6}Sr_{0.4}Co_{0.2}Fe_{0.8}O_3$. When the produced composite oxide powder was subjected to crystal analysis using X-rays, the produced composite oxide powder was confirmed to be the perovskite-type composite oxide powder.
The physical properties of the produced perovskite-type composite oxide powder were measured in the same manner as Example 1. The results of the measurements are shown in Table 2.

(Example 3)

A composite oxide powder in Example 3 was produced in the same manner as Example 1 except that the temperature was increased at a temperature increase rate of 1.5°C / min to 900°C and at a temperature increase rate of 1.0°C / min from 900°C to 1400°C, and after holding the temperature at 1400°C for 8 hours, the temperature was decreased at 1.0°C / min from 1400°C to 250°C and the temperature was thereafter allowed to cool down naturally. When the produced composite oxide powder was subjected to crystal analysis using X-rays, the produced composite oxide powder was confirmed to be the perovskite-type composite oxide powder.
The physical properties of the produced perovskite-type composite oxide powder were measured in the same manner as Example 1. The results of the measurements are shown in Table 2.

(Example 4)

(1) Production of raw material slurry

<1> 3400 g of $La_2O_3$, 1540 g of $SrCO_3$, 1040 g of $CaCO_3$, 4025 g of $MnO_2$, 4794 g of pure water and 500 g of an ammonium polyacrylate dispersant were weighed such that the powder had a composition of

$La_{0.49}Sr_{0.24}Ca_{0.25}Mn_{1.03}O_3$.

<2> 3100 g of $ZrO_2$ beads having a diameter of 1.75 mm was put into a vessel of a bead mill (capacity of 1.2 liters).
<3> The pure water, the dispersant and caustic soda were put into a buffer tank such that pH = about 10, and were mixed to be a dispersant aqueous solution. Then, the dispersant aqueous solution was circulated into the bead mill using a pump.
<4> While the dispersant aqueous solution in the buffer tank was being stirred at 400 rpm, the $La_2O_3$, the $SrCO_3$, the $CaCO_3$ and the $MnO_2$ which were weighed were put thereinto.
<5> The bead mill was rotated at 1000 rpm, and the $La_2O_3$, the $SrCO_3$, the $CaCO_3$ and the $MnO_2$ which were put thereinto were crushed for 80 minutes. Thereafter, the beads were separated and collected by passing the slurry through a sieve with an opening of 1 mm, and the raw materials adhered to the beads were washed with pure water of 200 ml. The slurry obtained was emulsified an dispersed at 8000 rpm for 5 minutes with the high-speed emulsifying/dispersing machine (Homomixer Mark II made by PRIMIX Corporation), and thus raw material slurry was produced.

(2) Drying and granulating

<1> Pure water was added into the produced raw material slurry, and thus the solid content concentration of the powder of the raw material slurry was adjusted to be 63% by mass.
<2> The rotation speed of the disc of the spray dryer (spray dryer made by OHKAWARA KAKOHKI CO., LTD.) was set to 25000 rpm, the inlet temperature and the outlet temperature of hot air for drying were set to 150°C and 75 °C, respectively, the supply speed of the raw material slurry was set to 9 kg / h, spray drying was performed on the raw material slurry and thus granulated powder was obtained. The granulated powder obtained was dried with the hot air dryer at 150°C for 1 hour. When the amount of water in the granulated powder which was dried was measured with the infrared water meter, the amount of water was 3.8% by mass.

(3) Burning

230 g of the granulated powder obtained was put into a cylindrical crucible (with a diameter of 12 cm and a height of 5 cm). Then, the temperature was increased at a temperature increase rate of 1.5°C / min from 25°C to 900°C in the air and at a temperature increase rate of 0.89°C / min from 900°C to 1400°C, after holding the temperature at 1400°C for 8 hours, the temperature was decreased at 1.0°C / min from 1400°C to 250°C and the temperature was thereafter allowed to cool down naturally, with the result that burned powder was obtained.

(4) Disintegration

2000 g of the burned powder obtained was put into a Henschel mixer.
The rotation speed of the Henschel mixer was set to 1400 rpm, the burned powder was crushed for 60 seconds and thus a composite oxide powder in Example 4 was obtained.
When the composite oxide powder obtained was subjected to crystal analysis using X-rays, the composite oxide powder obtained was confirmed to be the perovskite-type composite oxide powder.
The physical properties of the produced perovskite-type composite oxide powder were measured in the same manner as Example 1. The results of the measurements are shown in Table 2.

(Example 5)

A composite oxide powder was obtained in the same manner as Example 1 except that 6718 g of $La_2O_3$, 2937 g of $NiCO_3$, 1962 g of $CoCO_3$, 4100 g of pure water and 500 g of an ammonium polyacrylate dispersant were weighed and raw material slurry was produced such that the powder had a composition of $LaNi_{0.6}Co_{0.4}O_3$.
When the composite oxide powder obtained was subjected to crystal analysis using X-rays, the composite oxide powder obtained was confirmed to be the perovskite-type composite oxide powder.
The physical properties of the produced perovskite-type composite oxide powder were measured in the same manner as Example 1. The results of the measurements are shown in Table 2.

(Comparative Example 1)

A composite oxide in Comparative Example 1 was obtained in the same manner as Example 1 except that a cylindrical crucible was covered with a lid and burning was performed in a sealed state.

When the composite oxide powder obtained was subjected to crystal analysis using X-rays, the composite oxide powder obtained was confirmed to be the perovskite-type composite oxide powder.

The physical properties of the produced perovskite-type composite oxide powder were measured in the same manner as Example 1. The results of the measurements are shown in Table 2.

(Comparative Example 2)

A composite oxide in Comparative Example 2 was obtained in the same manner as Example 1 except that after spray drying was performed on the raw material slurry to obtain the granulated powder, drying using a dryer was not performed. The amount of water in the granulated powder obtained by performing spray drying on the raw material slurry was 6.0% by mass.

When the composite oxide powder obtained was subjected to crystal analysis using X-rays, the composite oxide powder obtained was confirmed to be the perovskite-type composite oxide powder.

The physical properties of the produced perovskite-type composite oxide powder were measured in the same manner as Example 1. The results of the measurements are shown in Table 2.

(Comparative Example 3)

A composite oxide powder in Comparative Example 3 was obtained by filtering and separating the raw material slurry without the intervention of a spray drying step, then performing drying in the air with a box-shaped dryer at 120°C for 24 hours to obtain a precursor (water value is less than 5%) and thereafter performing burning in the same manner as Example 1 in a burning step and the subsequent steps.

When the composite oxide powder obtained was subjected to crystal analysis using X-rays, the composite oxide powder obtained was confirmed to be the perovskite-type composite oxide powder.

The physical properties of the produced perovskite-type composite oxide powder were measured in the same manner as Example 1. The results of the measurements are shown in Table 2. When the precursor was observed with a scanning electron microscope, it was found that the precursor was not spherical and primary particles were connected in the shape of a network. After the burning, there were many particles which were "excessively large" depending on the field of view between particles, that is, in which since particle sintering progressed, individual particles extended off the field of view that was shot, even if those particles had been measured, the form thereof wound not have been grasped, it was clear that the particles do not belong to the present invention and thus the Feret diameters thereof were not calculated.

[Table 1]

| | Composition | | | | | | | Burning Temperature (°C) | X-ray evaluation |
|---|---|---|---|---|---|---|---|---|---|
| | Composition fomula | La | Sr | Ca | Co | Ni | Mn | | |
| Example 1 | $LaSrCaMnO_3$ | 0.5 | 0.2 | 0.3 | - | - | 1.0 | 1450 | single phase |
| Example 2 | $LaSrCaMnO_3$ | 0.5 | 0.2 | 0.3 | - | - | 1.0 | 1300 | single phase |
| Example 3 | $LaSrCaMnO_3$ | 0.5 | 0.2 | 0.3 | - | - | 1.0 | 1400 | single phase |
| Example 4 | $LaSrCaMnO_3$ | 0.5 | 0.2 | 0.3 | - | - | 1.0 | 1400 | single phase |
| Example 5 | $LaCoNiO_3$ | 1.0 | - | - | 0.4 | 0.6 | - | 1200 | single phase |
| Comparative example 1 | $LaSrCaMnO_3$ | 0.5 | 0.2 | 0.3 | - | | 1.0 | 1450 | single phase |
| Comparative example 2 | $LaSrCaMnO_3$ | 0.5 | 0.2 | 0.3 | - | - | 1.0 | 1450 | single phase |
| Comparative example 3 | $LaSrCaMnO_3$ | 0.5 | 0.2 | 0.3 | - | - | 1.0 | 1450 | single phase |

[Table 2]

| | Composition fomula | Area ratio B/A | Geometric standard deviation value of maximum | Circularity | BET specific surface area $(m^2/g)$ | Conductivity (S/cm) | $D_{50}$ ($\mu$m) |
|---|---|---|---|---|---|---|---|
| Example 1 | $LaSrCaMnO_3$ | 0.82 | 1.50 | 0.75 | 0.08 | 91 | 30 |
| Example 2 | $LaSrCaMnO_3$ | 0.88 | 1.44 | 0.83 | 0.29 | 61 | 26 |
| Example 3 | $LaSrCaMnO_3$ | 0.85 | 1.33 | 0.85 | 0.11 | 103 | 30 |
| Example 4 | $LaSrCaMnO_3$ | 0.86 | 1.53 | 0.85 | 0.09 | 105 | 29 |
| Example 5 | $LaCoNiO_3$ | 0.73 | 1.58 | 0.72 | 12.5 | 137 | 40 |
| Comparative example 1 | $LaSrCaMnO_3$ | 0.68 | 1.61 | 0.62 | 0.19 | 41 | 33 |
| Comparative example 2 | $LaSrCaMnO_3$ | 0.63 | 1.70 | 0.65 | 0.65 | 35 | 30 |
| Comparative example 3 | $LaSrCaMnO_3$ | - | - | - | 0.13 | 30 | 60 |

In Comparative Example 1, the burning was not performed in an open system, and thus a gas component generated from the raw material salts of the A element and the B element was not removed and was left in the crucible. In Comparative Example 2, after the spray drying was performed on the raw material slurry to obtain the granulated powder, the drying was not performed, and thus in the following burning, a gas generated from the granulated powder was not removed and was left in the crucible. Consequently, it is considered that in the composite oxide powders of Comparative Examples 1 and 2, particle growth did not uniformly occur in parts of one particle, thus the shape of the particle was distorted, a difference was produced between the directly measured cross-sectional area of the particle and the calculated cross-sectional area and a variation in the Feret diameter was produced.

In the composite oxide powder of Comparative Example 3, when the image analysis was performed with the SEM, it appeared that the particles were adhered to each other, it was difficult to perform analysis (particles were connected, many particles extended off the field of view for shooting and thus the shapes could not be grasped), at first glance, the average particle diameter ($D_{50}$) was larger than the particle diameter disclosed as a desired range in the present specification, it was clear that the average particle diameter ($D_{50}$) did not satisfy the present invention and thus the measurement and evaluation of the particle diameter were not performed.

## Claims

1. A perovskite-type composite oxide powder,

   wherein a geometric standard deviation value of a maximum Feret diameter of the perovskite-type composite oxide powder calculated by performing image analysis on an SEM image acquired with a scanning electron microscope is equal to or greater than 1.01 and less than 1.60, and
   when it is assumed that the perovskite-type composite oxide powder is spherical, a ratio (B/A) of an area value B directly calculated by the image analysis to an area value A calculated from the maximum Feret diameter is equal to or greater than 0.7 and less than 1.0.

2. The perovskite-type composite oxide powder according to claim 1,
   wherein the perovskite-type composite oxide powder has a composition represented by a general formula $ABO_{3-\delta}$ (where an A element is at least one selected from lanthanum, strontium and calcium, a B element is at least one selected from manganese, cobalt, nickel and iron and $\delta$ represents an amount of loss of oxygen).

3. The perovskite-type composite oxide powder according to claim 2,
   wherein lanthanum is included as the A element serving as an essential component.

**4.** The perovskite-type composite oxide powder according to any one of claims 1 to 3,
wherein a circularity of the perovskite-type composite oxide powder calculated by performing the image analysis on the SEM image acquired with the scanning electron microscope is equal to or greater than 0.7 and less than 1.0.

**5.** The perovskite-type composite oxide powder according to any one of claims 1 to 4,
wherein a BET specific surface area is equal to or greater than 0.01 $m^2$ / g and equal to or less than 0.5 $m^2$ / g.

**6.** The perovskite-type composite oxide powder according to any one of claims 1 to 5,
wherein an average particle diameter $D_{50}$ based on a volume that is obtained by a laser diffraction particle size distribution analyzer is equal to or greater than 10 $\mu$m and equal to or less than 50 $\mu$m.

**7.** An air electrode for a solid oxide fuel cell, the air electrode comprising:
the perovskite-type composite oxide powder according to any one of claims 1 to 6.

**8.** A solid oxide fuel cell comprising:
a fuel electrode:

a solid electrolyte; and
an air electrode,
wherein as the air electrode, the air electrode according to claim 7 is used.

*Fig. 1*

FERET
DIAMETER
IN VERTICAL
DIRECTION

FERET DIAMETER IN
PARALLEL DIRECTION

*Fig. 2*

← AIR

3

2

1

← FUEL GAS

## INTERNATIONAL SEARCH REPORT

| International application No. |
| --- |
| **PCT/JP2022/033357** |

| A. CLASSIFICATION OF SUBJECT MATTER |
| --- |
| ***C01G 45/00***(2006.01)i; ***C01G 53/00***(2006.01)i; ***H01M 8/12***(2016.01)i; ***H01M 4/86***(2006.01)i; ***H01M 4/88***(2006.01)i; ***H01M 12/06***(2006.01)i<br>FI: C01G45/00; H01M4/86 T; H01M8/12 101; H01M4/88 T; C01G53/00 A; H01M12/06 F |
| According to International Patent Classification (IPC) or to both national classification and IPC |

| B. FIELDS SEARCHED |
| --- |
| Minimum documentation searched (classification system followed by classification symbols)<br>C01G25/00-47/00; C01G49/10-99/00; H01M4/86-4/98; H01M8/00-8/02976; H01M8/08-8/2495; H01M12/00-16/00 |
| Documentation searched other than minimum documentation to the extent that such documents are included in the fields searched<br>Published examined utility model applications of Japan 1922-1996<br>Published unexamined utility model applications of Japan 1971-2022<br>Registered utility model specifications of Japan 1996-2022<br>Published registered utility model applications of Japan 1994-2022 |
| Electronic data base consulted during the international search (name of data base and, where practicable, search terms used) |

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | JP 2020-113424 A (DOWA ELECTRONICS MATERIALS CO., LTD.) 27 July 2020 (2020-07-27)<br>entire text | 1-8 |
| A | WO 2020/196101 A1 (SAKAI CHEMICAL INDUSTRY CO., LTD.) 01 October 2020 (2020-10-01)<br>entire text | 1-8 |
| A | JP 2015-201440 A (DOWA ELECTRONICS MATERIALS CO., LTD.) 12 November 2015 (2015-11-12)<br>entire text | 1-8 |
| A | JP 2020-55704 A (DOWA ELECTRONICS MATERIALS CO., LTD.) 09 April 2020 (2020-04-09)<br>entire text | 1-8 |
| A | JP 2021-73164 A (DOWA ELECTRONICS MATERIALS CO., LTD.) 13 May 2021 (2021-05-13)<br>entire text | 1-8 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **21 September 2022** | **08 November 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2022/033357**

**C.    DOCUMENTS CONSIDERED TO BE RELEVANT**

| Category* | Citation of document, with indication, where appropriate, of the relevant passages | Relevant to claim No. |
|---|---|---|
| A | JP 2011-228009 A (DOWA ELECTRONICS MATERIALS CO., LTD.) 10 November 2011 (2011-11-10)<br>        entire text | 1-8 |

Form PCT/ISA/210 (second sheet) (January 2015)

**INTERNATIONAL SEARCH REPORT**
Information on patent family members

International application No.

**PCT/JP2022/033357**

| Patent document cited in search report | | | Publication date (day/month/year) | Patent family member(s) | Publication date (day/month/year) |
|---|---|---|---|---|---|
| JP | 2020-113424 | A | 27 July 2020 | (Family: none) | |
| WO | 2020/196101 | A1 | 01 October 2020 | US 2022-0173410 A1 entire text CN 113661144 A | |
| JP | 2015-201440 | A | 12 November 2015 | (Family: none) | |
| JP | 2020-55704 | A | 09 April 2020 | (Family: none) | |
| JP | 2021-73164 | A | 13 May 2021 | (Family: none) | |
| JP | 2011-228009 | A | 10 November 2011 | (Family: none) | |

Form PCT/ISA/210 (patent family annex) (January 2015)

**REFERENCES CITED IN THE DESCRIPTION**

**Patent documents cited in the description**

- JP 2015118922 A
- JP 2015201440 A
- JP 2021073164 A